# EUROPÄISCHE PATENTANMELDUNG

(11) **EP 3 988 729 A1**
(43) Veröffentlichungstag der Anmeldung: **27.04.2022**
(21) Anmeldenummer: 21201119.1
(22) Anmeldetag: 06.10.2021
(51) Int. Cl.: E04B 1/00, E04B 1/36, E04B 1/98, F16F 1/371, F16F 1/373, F16F 1/44

(54) **UNBEWEHRTES ELASTOMERLAGER**

(30) Priorität: 22.10.2020 DE 102020127827
(71) Anmelder: Calenberg Ingenieure GmbH, 31020 Salzhemmendorf (DE)
(72) Erfinder: Jang, Byung-Yong, 31840 Hessisch Oldendorf (DE)
(74) Vertreter: Wagner, Carsten

(57) **Zusammenfassung**

Ein unbewehrtes Elastomerlager 10, insbesondere zur thermischen Trennung von Bauteilen im Stahlbau, weist einen plattenförmigen Grundkörper 12 aus thermisch isolierendem Elastomermaterial auf, der eine im Einbauzustand des Elastomerlagers auf Druck belastete Druckbelastungszone 14 aufweist. Erfindungsgemäß ist in der Druckbelastungszone 14 wenigstens eine Ausnehmung 16-22 in dem Grundkörper gebildet, in die ein Einsatzelement 24-30 eingesetzt ist, dessen Druckfestigkeit ≥ etwa 235 N/mm² ist.

## Beschreibung

Die Erfindung betrifft ein unbewehrtes Elastomerlager in der im Oberbegriff des Anspruchs 1 genannten Art, insbesondere zur thermischen Trennung von Bauteilen im Stahlbau.

Eine Durchdringung einer Gebäudehülle mit Stahlträgern, beispielsweise zum Anschließen von Balkonen oder Vordächern, führt zu Wärmebrücken und damit zu Energieverlusten und der Gefahr einer Schimmelbildung durch Kondensation der Raumluft. Zur Vermeidung entsprechender Wärmebrücken ist es bekannt, mittels eines Elastomerlagers eine thermische Trennung zu bewirken.

Durch den Fachaufsatz "Zum Tragverhalten von geschraubten Stirnplattenstößen mit elastomerer Trennschicht", L. Nasdala, A. Blust, N. Jüngel, Bauingenieur, Bd. 94, Februar 2019, ist ein Elastomerlager mit den Merkmalen des Oberbegriffs des Anspruchs 1 bekannt.

Das aus der Druckschrift bekannte Elastomerlager weist einen plattenförmigen Grundkörper aus thermisch isolierendem Elastomermaterial auf, der eine im Einbauzustand des Elastomerlagers auf Druck belastete Druckbelastungszone aufweist. Im Einbauzustand ist das Elastomerlager zwischen zwei miteinander verbundenen Bauteilen angeordnet und bewirkt eine thermische Trennung zwischen den Bauteilen.

Der Erfindung liegt die Aufgabe zugrunde, ein Elastomerlager der in Oberbegriff des Anspruchs 1 genannten Art anzugeben, das gegenüber dem bekannten Elastomerlager verbessert ist.

Diese Aufgabe wird durch die in Anspruch 1 angegebene Erfindung gelöst.

Die Erfindung sieht vor, dass in der Druckbelastungszone wenigstens eine Ausnehmung in dem Grundkörper gebildet ist, in die ein Einsatzelement eingesetzt ist, das aus einem Material besteht, dessen Druckfestigkeit ≥ etwa 235 N/mm² ist.

Durch das Einsatzelement ist in der Druckbelastungszone punktuell die Druckfestigkeit des Elastomerlagers erhöht, wobei entsprechend der jeweils gewünschten Erhöhung der Druckfestigkeit Form, Größe und Anzahl der Einsatzelemente innerhalb weiter Grenzen wählbar sind.

Durch die punktuelle Annordnung von Einsatzelementen bleiben die Eigenschaften des Elastomerlagers im Übrigen im Wesentlichen gleich.

Entsprechend den jeweiligen Gegebenheiten und Anforderungen ist das Material des Einsatzelements oder der Einsatzelemente innerhalb weiter Grenzen wählbar.

Eine vorteilhafte Weiterbildung der Erfindung sieht vor, dass wenigstens ein Einsatzelement aus einem Material besteht, dessen Druckfestigkeit ≥ etwa 900 N/mm2, insbesondere ≥ etwa 1600 N/mm², ist. Auf diese Weise ist die Druckfestigkeit in der Druck Belastungszone besonders hoch.

Entsprechend den jeweiligen Anforderungen ist das Material des Einsatzelements bzw. der Einsatzelemente innerhalb weiter Grenzen wählbar. Eine außerordentlich vorteilhafte Weiterbildung der Erfindung sieht insoweit vor, dass wenigstens ein Einsatzelement aus Keramik, insbesondere Oxidkeramik, besteht. Entsprechende Keramiken stehen mit hoher Druckfestigkeit und guten thermischen Isolationseigenschaften zur Verfügung.

Eine vorteilhafte Weiterbildung der Erfindung sieht vor, dass wenigstens ein Einsatzelement aus einem thermisch isolierenden Material besteht. Auf diese Weise bleibt die mittels des Elastomerlagers zu bewirkende thermische Isolierung zwischen den Bauteilen erhalten, sodass im Bereich der Einsatzelemente die Bildung von Wärmebrücken vermieden ist.

Eine vorteilhafte Weiterbildung der vorgenannten Ausführungsform sieht vor, dass das Material des Einsatzelementes eine Wärmeleitfähigkeit (20 °C) von etwa 3 W/(m * K) hat.

Eine andere vorteilhafte Weiterbildung der Erfindung sieht vor, dass das oder jedes Einsatzelement zu der zugeordneten Ausnehmung komplementär oder annähernd komplementär geformt ist. Dabei ist die Geometrie des oder jedes Einsatzelementes entsprechend den jeweiligen Anforderungen und Gegebenheiten innerhalb weiter Grenzen wählbar.

Eine vorteilhafte Weiterbildung sieht in Bezug auf die Geometrie der Einsatzelemente vor, dass wenigstens ein Einsatzelement einen kreisförmigen oder annähernd kreisförmigen Querschnitt aufweist. Auf diese Weise ist sowohl die Fertigung der Einsatzelemente als auch das Bilden entsprechender Ausnehmungen in dem Grundkörper des Elastomerlagers besonders einfach gestaltet.

Das Einsetzen des oder jedes Einsatzelementes in die zugeordnete Ausnehmung in dem Grundkörper des Elastomerlagers und die Befestigung in der Ausnehmung kann auf beliebige geeignete Weise erfolgen. Insoweit sieht eine vorteilhafte Weiterbildung der Erfindung vor, dass das Einsatzelement in die zugeordnete Ausnehmung eingepresst ist. Auf diese Weise ist die Herstellung des Elastomerlagers besonders einfach gestaltet. Der Verzicht auf Klebstoffe oder andere Verbindungsmittel zur Verbindung der Einsatzelemente mit dem Grundkörper des Elastomerlagers erleichtert darüber hinaus ein späteres Recycling der Bestandteile des Elastomerlagers. Entsprechend der Funktion einer Pressverbindung bzw. Presspassung ist hierbei der Querschnitt der Ausnehmung im Wesentlichen komplementär zu dem Querschnitt des Einsatzelementes geformt, jedoch etwas kleiner als der Querschnitt des Einsatzelementes.

Um das Einpressen des oder jedes Einsatzelements in die zugeordnete Ausnehmung zu vereinfachen, sieht eine andere vorteilhafte Weiterbildung der Erfindung vor, dass das Einsatzelement an seinem in Einpressrichtung vorderen Ende eine umlaufende Fase aufweist.

Grundsätzlich kann eine Ausnehmung zur Aufnahme eines Einsatzelementes als Vertiefung in dem Grundkörper ausgebildet sein. Eine vorteilhafte Weiterbildung sieht insoweit vor, dass die oder jede Ausnehmung als Durchbruch in dem Grundkörper ausgebildet ist. Auf diese Weise ist die Herstellung des Elastomerlagers weiter vereinfacht. Außerdem ist das Recycling des Elastomerlagers vereinfacht, indem während des Recyclingsvorgangs die Einsatzelemente aus dem Grundkörper des Elastomerlagers mittels einer geeigneten Pressvorrichtung herausgepresst werden können.

Gemäß einer anderen Weiterbildung der Erfindung ist vorgesehen, dass wenigstens ein Einsatzelement wenigstens teilweise aus Metall, insbesondere Stahl, besteht.

Eine andere vorteilhafte Weiterbildung der Erfindung sieht vor, dass in der Druckbelastungszone eine Mehrzahl von Ausnehmungen gebildet ist, in die Einsatzelemente eingesetzt sind. Dabei ist die Anzahl der Einsatzelemente entsprechend den jeweiligen Anforderungen und Gegebenheiten innerhalb weiter Grenzen wählbar und prinzipiell nicht begrenzt.

Eine vorteilhafte Weiterbildung der vorgenannten Ausführungsform sieht vor, dass wenigstens drei Ausnehmungen linienförmig, insbesondere entlang einer geraden Linie, angeordnet sind. Die Anordnung der Einsatzelemente richtet sich danach, entlang welcher Geometrie eine Erhöhung der Druckfestigkeit gewünscht ist.

Eine erfindungsgemäße Verbindungsanordnung zwischen Bauteilen, insbesondere als Stirnplattenanschluss, ist im Anspruch 14 angegeben und weist ein erstes Bauteil und ein mit dem ersten Bauteil verbundenes zweites Bauteil auf, wobei die Bauteile vorzugsweise aus Stahl bestehen, und eine zwischen den Bauteilen angeordnete thermische Isolierung auf, die wenigstens ein erfindungsgemäßes Elastomerlager aufweist. Es ergeben sich sinnentsprechend die gleichen Vorteile und Eigenschaften wie bei dem erfindungsgemäßen Elastomerlager.

Soweit im Kontext der Erfindung Zahlenwerte von Materialparametern als Näherungswerte ("etwa") angegeben sind, so sind auch Werte erfasst, die im Rahmen der üblichen Messgenauigkeit bei der Ermittlung des Materialparameters von dem angegebenen Zahlenwert abweichen.

Die Erfindung wird nachfolgend anhand eines Ausführungsbeispiels unter Bezugnahme auf die beigefügte stark schematisierte Zeichnung näher erläutert. Dabei bilden alle in der Zeichnung dargestellten, in der Beschreibung beschriebenen und in den Patentansprüchen beanspruchten Merkmale für sich genommen sowie in beliebiger technisch sinnvoller Kombination miteinander den Gegenstand der Erfindung, unabhängig von ihrer Zusammenfassung in den Patentansprüchen und deren Rückbezügen sowie unabhängig von ihrer Beschreibung bzw. Darstellung in der Zeichnung.

Es zeigt:
- Fig. 1: in einer schematischen Perspektivansicht einen Stirnplattenstoß mit einem Elastomerlager als thermische Trennschicht,
- Fig. 2: stark schematisiert eine Draufsicht auf ein Ausführungsbeispiel eines erfindungsgemäßen unbewehrten Elastomerlagers und
- Fig. 3: einen Schnitt entlang einer Linie A-A in Fig. 2.

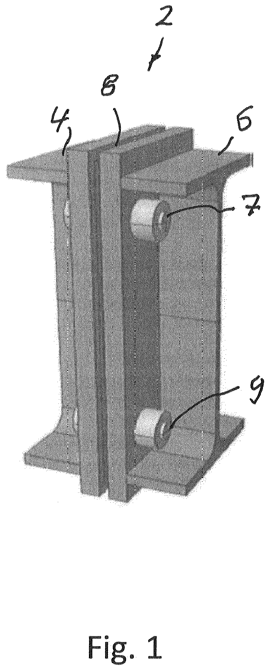

In Fig. 1 ist schematisch ein Stirnplattenstoß 2 dargestellt, bei dem ein erstes Bauteil 4 mit einem zweiten Bauteil 6 verbunden ist. Bei den Bauteilen 4, 6 handelt es sich um Träger aus Metall, zwischen deren einander zugewandten Stirnflächen eine thermische Trennschicht in Form eines Elastomerlagers 8 angeordnet ist. Die Bauteile 4, 6 sind über Schraubbolzen 7, 9 miteinander verbunden.

Ein entsprechender Stirnplattenstoß 2 wird beispielsweise verwendet, um einen Balkon oder ein Vordach an einem Gebäude einzubringen. Technische Einzelheiten und Funktionsweise eines entsprechenden Stirnplattenstoßes 2 sind dem Fachmann allgemein bekannt und werden daher hier nicht näher erläutert.

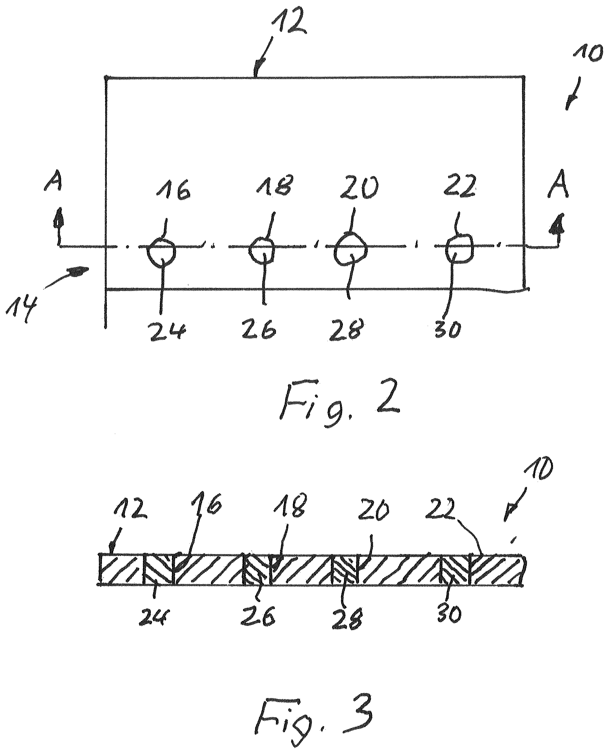

Unter Bezugnahme auf Fig. 2 und Fig. 3 wird nachfolgend ein Ausführungsbeispiel eines erfindungsgemäßen Elastomerlagers näher erläutert.

In Fig. 2 ist in einer schematischen Draufsicht ein Ausführungsbeispiel eines erfindungsgemäßen unbewehrten Elastomerlagers 10 dargestellt, das einen plattenförmigen Grundkörper 12 aus thermisch isolierendem Elastomermaterial aufweist, der eine im Einbauzustand des Elastomerlagers auf Druck belastete Druckbelastungszone 14 aufweist. Form, Größe und Material des Grundkörpers 12 sind entsprechend den jeweiligen Anforderungen innerhalb weiter Grenzen wählbar.

Erfindungsgemäß ist in der Druckbelastungszone 14 wenigstens eine Ausnehmung in dem Grundkörper 12 gebildet, in die ein Einsatzelement eingesetzt ist, das aus einem weiter unten näher erläuterten Material besteht.

Bei dem dargestellten Ausführungsbeispiel sind vier als Durchbrüche in dem Grundkörper 12 ausgebildete Ausnehmungen 16, 18, 20, 22 vorgesehen, in die jeweils ein Einsatzelement 24, 26, 28 bzw. 30 eingesetzt ist.

Bei dem dargestellten Ausführungsbeispiel bestehen die Einsatzelemente 24-30 aus einem thermisch isolierenden Keramikmaterial.

Wie aus Fig. 2 ersichtlich ist, sind die Einsatzelemente 24-30 zu den zugeordneten Ausnehmungen 16-22 komplementär geformt, wobei bei dem dargestellten Ausführungsbeispiel der Querschnitt der Einsatzelemente 24-30 und zugeordneten Ausnehmungen 16-22 kreisförmig ist.

Bei dem dargestellten Ausführungsbeispiel sind die Einsatzelemente 24-30 in die zugeordneten Ausnehmungen 16-22 des Grundkörpers 12 eingepresst. Aus der Zeichnung ist nicht ersichtlich und deshalb wird hier erläutert, dass jedes der Einsatzelemente 24-30 an seinem in Einpressrichtung vorderen Ende eine umlaufende Fase aufweist, um das Einpressen der Einsatzelemente 24-30 in die Ausnehmungen 16-22 bei der Herstellung des Elastomerlagers 10 zu erleichtern.

Der Grundkörper 12 des Elastomerlagers 10 besteht bei dem dargestellten Ausführungsbeispiel aus NBR (Nitrilkautschuk) mit folgenden Materialparametern:
Shore-Härte: 93+-5 ShA
Dichte: 1,23+-0,02 g/cm³
Reißfestigkeit: > 15 N/mm²
Reißdehnung: >100%
Weiterreißwiderstand: > 5,0 N/mm
Polymer: NBR
Wärmeleitfähigkeit: 0,23 +- 0,05 W/(m*K)

Die Einsatzelemente 24-30 bestehen bei dem dargestellten Ausführungsbeispiel aus einer Oxidkeramik mit den folgenden Materialparametern:
Druckfestigkeit: 1600 N/mm²
E-Modul: 210 N/mm2
Wärmeleitfähigkeit bei 20°C: 3 W/(m*K)
Dichte: 5,74 +- 0,1 g/cm³

Der aus dem Grundkörper 12 und den Einsatzelementen 24-30 bestehende Kompositkörper hat eine Temperaturbeständigkeit von -20 °C bis +70 °C.

Durch die Einsatzelemente 24-30 ist die Druckbelastbarkeit des Elastomerlagers 10 in der Druckbelastungszone verbessert, wobei aufgrund der Verwendung eines Keramikmaterials mit einer relativ geringen Wärmeleitfähigkeit verhindert ist, dass im Bereich der Einsatzelemente 24-30 Wärmebrücken entstehen.

Auf diese Weise ist ein Elastomerlager geschaffen, das hochbelastbar ist und gleichzeitig eine ausgezeichnete thermische Trennschicht bildet.

Bei dem dargestellten Ausführungsbeispiel sind die Einsatzelemente 24-30 entlang einer geraden Linie angeordnet. Die Anzahl und geometrische Anordnung der Einsatzelemente 24-30 sind entsprechend den jeweiligen Anforderungen und Gegebenheiten innerhalb weiter Grenzen wählbar.

## Patentansprüche

1. Unbewehrtes Elastomerlager (10), insbesondere zur thermischen Trennung von Bauteilen (4, 6) im Stahlbau,
mit einem plattenförmigen Grundkörper (12) aus thermisch isolierendem Elastomermaterial, der eine im Einbauzustand des Elastomerlagers (10) auf Druck belastete Druckbelastungszone (14) aufweist,
**dadurch gekennzeichnet,**
**dass** in der Druckbelastungszone (14) wenigstens eine Ausnehmung (18-22) in dem Grundkörper (12) gebildet ist, in die ein Einsatzelement (24-30) eingesetzt ist, das aus einem Material besteht, dessen Druckfestigkeit ≥ etwa 235 N/mm² ist.

2. Elastomerlager nach Anspruch 1, **dadurch gekennzeichnet, dass** wenigstens ein Einsatzelement (24-30) aus einem Material besteht, dessen Druckfestigkeit ≥ etwa 900 N/mm2, insbesondere ≥ etwa 1600 N/mm², ist.

3. Elastomerlager nach Anspruch 1 oder 2, **dadurch gekennzeichnet, dass** wenigstens ein Einsatzelement (24-30) aus Keramik, insbesondere Oxidkeramik, besteht.

4. Elastomerlager nach einem der vorhergehenden Ansprüche, **dadurch gekennzeichnet, dass** wenigstens ein Einsatzelement (24-30) aus einem thermisch isolierenden Material besteht.

5. Elastomerlager nach Anspruch 4, **dadurch gekennzeichnet, dass** das Material des Einsatzelementes (24-30) eine Wärmeleitfähigkeit (20 °C) von etwa 3 W/(m * K) hat.

6. Elastomerlager nach einem der vorhergehenden Ansprüche, **dadurch gekennzeichnet, dass** das oder jedes Einsatzelement (24-30) auf zu der zugeordneten Ausnehmung (16-22) komplementär oder annähernd komplementär geformt ist.

7. Elastomerlager nach einem der vorhergehenden Ansprüche, **dadurch gekennzeichnet, dass** wenigstens ein Einsatzelement (24-30) einen kreisförmigen oder annähernd kreisförmigen Querschnitt aufweist.

8. Elastomerlagers nach einem der vorhergehenden Ansprüche, **dadurch gekennzeichnet, dass** das Einsatzelement (24-30) in die zugeordnete Ausnehmung (16-22) eingepresst ist.

9. Elastomerlager nach Anspruch 8, **dadurch gekennzeichnet, dass** das oder jedes Einsatzelement (24-30) an seinem in Einpressrichtung vorderen Ende eine umlaufende Fase aufweist.

10. Elastomerlager nach einem der vorhergehenden Ansprüche, **dadurch gekennzeichnet, dass** die oder jede Ausnehmung (16-22) als Durchbruch in dem Grundkörper (12) ausgebildet ist.

11. Elastomerlager nach einem der vorhergehenden Ansprüche, **dadurch gekennzeichnet, dass** wenigstens ein Einsatzelement (24-30) wenigstens teilweise aus Metall, insbesondere Stahl, besteht.

12. Elastomerlager nach einem der vorhergehenden Ansprüche, **dadurch gekennzeichnet, dass** in der Druckbelastungszone (14) eine Mehrzahl von Ausnehmungen (16-22) gebildet ist, in die Einsatzelemente (24-30) eingesetzt sind.

13. Elastomerlager nach Anspruch 12, **dadurch gekennzeichnet, dass** wenigstens drei Ausnehmungen (24-30) linienförmig, insbesondere entlang einer geraden Linie, angeordnet sind.

14. Verbindungsanordnung zwischen Bauteilen, insbesondere Stirnplattenanschluss, mit einem ersten Bauteil (4) und mit einem mit dem ersten Bauteil (4) verbundenen zweiten Bauteil (6), wobei die Bauteile vorzugsweise aus Stahl bestehen, und mit einer zwischen den Bauteilen (4, 6) angeordneten thermischen Isolierung, die wenigstens ein Elastomerlager (10) nach einem der vorhergehenden Ansprüche aufweist.
